# EUROPEAN PATENT SPECIFICATION

(11) **EP 0 695 889 B1**
(45) Date of publication and mention of the grant of the patent: **20.12.2000**
(21) Application number: 94912993.6
(22) Date of filing: 28.04.1994
(51) Int. Cl.: F16H 1/20, F16H 1/22, F16H 57/02

(54) **EXTERNALLY MESHING CYLINDRICAL TOOTHED GEAR**
ZYLINDRISCHES ZAHNRAD FÜR AUSSEREN ZAHNEINGRIFF
ENGRENAGE CYLINDRIQUE A ENGRENEMENT EXTERNE

(30) Priority: 28.04.1993 BG 9767793
(43) Date of publication of application: 07.02.1996
(73) Proprietor: DIMOV, Ivan Ivanov, Sofia 1359 (BG)
(72) Inventor: DIMOV, Ivan Ivanov, Sofia 1359 (BG)
(74) Representative: Pellmann, Hans-Bernd, Dipl.-Ing.
(86) International application number: PCT/BG94/00004
(87) International publication number: WO 94/25778

(56) References cited:
- CH-A- 628 963
- DE-A- 2 518 115
- SU-A- 284 542
- SU-A- 507 730
- SU-A- 793 417
- SU-A- 1 634 548
- US-A- 4 435 994

## Description

This invention relates to an improved external cylindrical gearing, e.g. for use in gearboxes, and, more particularly, in gear drives of prime movers and all kinds of processing machines.

An enclosed bearing facilitates manufacture of gear boxes and the like. As an example, consider the facilitated assembly and disassembly of a reduction gear box having a case receiving bearings, gear-wheels and shafts. The fabrication of the split case, however, is both labor-intensive and expensive. With enclosed bearings, used particularly in machine tools and automobile transmission gears, the case can be of a nonsplit type and inexpensive to manufacture but assembly and disassembly of the gear-wheels and bearings within the case can be a limitation.

According to document SU-A-1096421 there is known a construction of a two-stage (two-speed) gear box meeting stringent limited-noise requirements is well known, this gearbox being built with a split case and having helical gears with parallel axes only, the reducing gearing thereof being made with two pairs of gears with reverse direction of the helix angles (i.e. LH runs with RH).

The substantial drawback of this reduction gearbox is that, e.g., for a better flood oiling of all mating gears thereof, the gear ratio of gearing-up is accomplished by decreasing the gear ratio of gearing down, and as a consequence, the overall dimensions and the weight of the reducer are increased.

According to the further document EP-A-0 271 898 there is also known a construction of a multipath external cylindrical gearing of the kind in which the power is divided between distinct paths. In a first step the power is partitioned and in a second step the power paths are combined, the gearing having an input pinion stem in engagement with the gear wheels of no less than two of the compound cluster spur gears thereof. The axes of the cluster spur gears are located round the periphery of a cylindrical surface and this surface lies along the axis of the input pinion-stem. The pinions of the cluster spur gears are engaged with a central gear wheel. The central gear wheel is journaled in such a way that it lies along the axis of the pinion stem. The rolling contact bearings are mounted in respective holes (bearing housings) of the case and cover thereof. The bearings support the cluster spur gears, and a friction coupling used to transmit the torque. The coupling serves not only to prevent an overload but more particularly, to gain the relative angular orientation of the rings of the cluster spur gears, in order to make meshing possible. The assembly proper of the bearings and cluster spur gears may be executed from the exterior of the case.

The above-mentioned gearing design is not free from the limitations, e.g,. (a) the disclosed construction is tied up with a specific example of using and, as consequence, it is not suitable for the general case of machine drives; (b) it is impossible to add more than said two steps, in order to reach a still higher gear ratio; (c) said gearing design is complicated which is due to the set of parts presented the respective places thereof; (d) said pinion-stem and axle thereof are not easy to manufacture designs and in result, the proper making of these members is tedious.

The problem to be solved by the present invention is to provide an improved gearbox having a less complicated structure.

This problem is solved by the combination of the features set forth in each of the independent claims 1 and 4. Preferable embodiments of the invention are set forth in the subclaims.

The external cylindrical gearing suggested features an non-split case (one-piece case), an input pinion-stem, an intermediate pinion-stem being fitted with the respective gear-wheels thereof, and an output shaft being fitted with a last gear-wheel thereon. In line with the invention, said intermediate pinion-stem having two journal necks and being journaled in radial roller bearings, said bearings being supported by said non-split case and featuring two collars on the respective outer races thereof, whereby in the non-loaded zones of the bearing housings in said case radial installation slots have been made, each of said slots having a width greater than the MAX diameter of the inner race of said radial roller bearing. Hereinafter, it possible to use radial roller bearings of the kind in which the respective inner races thereof are not used at all. Just then, the width of the intermediate slots thereof might be greater than the respective dimension of said journal necks.

With said external cylindrical bearings, qualified under low noise level requirements, the high speed step is divided between two distinct paths by means of two symmetrically arranged pairs of helical gears, said gears having opposite in direction slopes of the respective teeth on gears thereof (e.g. LEFT hand runs with RIGHT hand helical). With the bearings suggested, said intermediate pinion-stems (i.e. pinion shafts) having said journal necks and are journaled in said ball bearings immediately in said non-split case, just as in the above-mentioned bearings. Also, in accord with the conception of the invention, the construction of a multi-path cylindrical external gearing is suggested, said gearing comprising a case (one-piece part), being fitted with a cover on one of the sides thereof, an input pinion-stem being housed in said case (or box), said pinion-stem being in engagement with respective gear-wheels of more than two of the composed double spur gears (or cluster spur gears) thereof, the axis of said cluster spur gears being located round the periphery of a cylindrical surface thereof, said surface being on the same line (axis) with said input shaft, the rings of said cluster spur gears being in engagement with a gearing-down central gear-wheel, said gear-wheel being fitted on an output shaft, said output shaft being aligned with said input shaft.

In accord with the invention, either of said cluster spur gears comprises a pinion-stem and a respective gear-wheel thereof fitted on it, whereby the torque is transmitted between said pinion-stem and gear-wheel by means of either a splined shaft-splined hole or an interference fit. Each of said journal necks of said intermediate shafts lies in said non-split case, and more particularly, in the exterior wall thereof: radial roller bearings featuring said two collars on outer races, and in the interior wall thereof: radial bearings. In the respective non-bearing zones of said bearing houses holes for said roller bearings, radial installation slots have been manufactured in said external wall of said case, the width of said slots being greater than the O\D of the ring of said intermediate pinion-stem, whereby said slots representing a fractional cylindrical surface being manufactured in said external wall of said case, and the diameter of said surface being greater than said gear O\D and said surface being aligned with said central gear-wheel.

Two of the above-disclosed two-stage, multipath bearings, way be set out in series in a single, common non-split case, said this-up featuring a respective angular displacement thereof, said bearings being separated by means of a partition wall, whereby a cylindrical hole divided by set installation has been manufactured in said wall and the diameter of said hole being greater than said O\D of the gear-wheels from the first (input) gearing, hereinafter a "floating' cluster gear links together said two bearings and comprises the input pinion-stem from the second and a respective gearing-down thereof from the second gearing.

A considerable advantage of the invention consist in the fact that it creates a possibility to mount in said non-split case preassembled external to said case members, said members comprising intermediate pinion-stems, (or shafts whit supporting journals), gear-wheels, radial ball bearings, and the respective inner races thereof, thanks to the execution of said installation slots in the respective bearing housings thereof, said bearing housings in said case, and in conjunction with the use of bearings with a suitable design. Moreover, a possibility created for said preassembled outside the non-split gear housing of said type of bearings, by applying on interference fit between said shafts and gear-wheels thereof.

Also, the invention creates a possibility to develop bearings of various designs and more particularly, the transfer cases, said transfer cases comprising non-split housing (case) and the respective steps (stages) being divided two symmetrically arranged matching parallel axis spur gears (e.g. LEFT hand runs with RIGHT hand helical).

Thanks to said installation slots and cylindrical holes, both being executed in said housing walls, a possibility is created to integrate, mount and connect in series two\more multipath, two-stage bearings in a single non-split housing which will result in higher gear ratios than hitherto while using suitable roller bearings.

In such a multi-path gearing, the engagement of pinions with the respective gear-wheels thereof calls for the use of relative angular position of the rings of all intermediate cluster gears, said position being realizable and made secured by assembling said gear-wheel with said pinion-stem with an interference fit (e.g. a press fit). Thanks to the invention created opportunities, said fit might be used in all bearings being mounted in a non-split type cases.

In the following the invention is further illustrated by embodiments with reference to the accompanying drawing in which:
FIG. 1 is a spur gear gearbox for a two-stage reduction gearing seen in cross section along the line I-I of FIG.2;
FIG. 2 is a cross sectional view taken along the line II-II of FIG. 1;
FIG. 3 is a view similar to FIG. 1 of a helical-gear gearbox with two reduction stages and designed for minimum noise levels, the view being in section along the line III-III of FIG. 4;
FIG. 4 is a longitudinal section taken along the line IV-IV of FIG. 3;
FIG. 5 is an axial section through a multipath geared motor with two reduction stages;
FIG. 6 is a section along the line VI-VI of FIG. 5;
FIG. 7 is an axial section through a multipath geared motor with four reduction stages; and
FIGS. 8a and 8b are respectively partial sectional views taken along the lines VIIIa-VIIIa and VIIIb-VIIIb of FIG. 7 respectively.

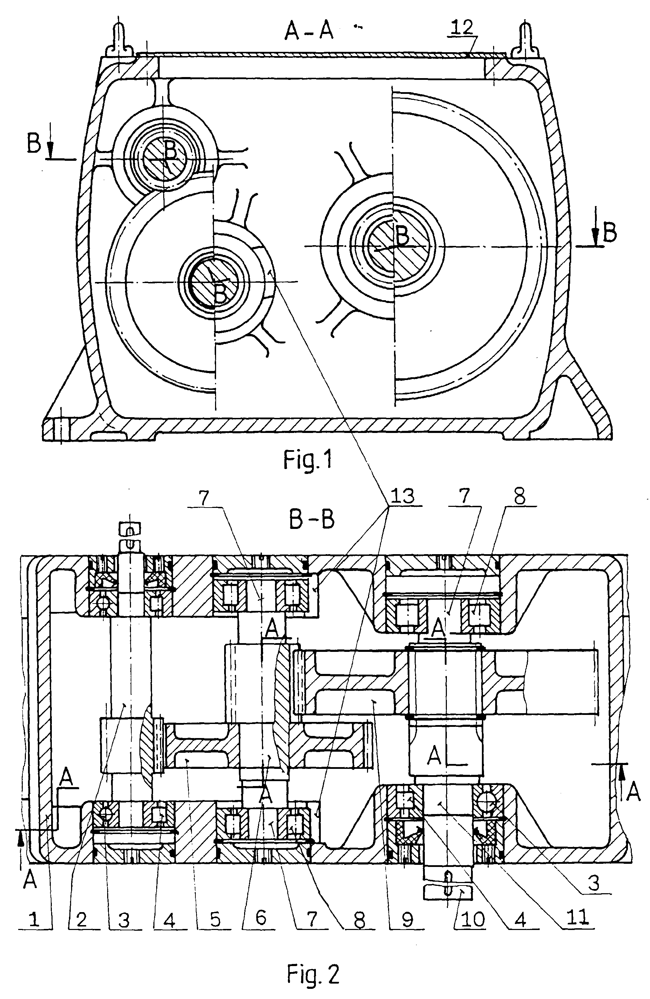

A two-stage cylindrical gearbox, pictured in the drawings 1 and 2, consisting of a non-split case (one-piece part) 1, an input spur pinion-stem 2, said pinion-stem being supported by ball bearings 3 or by roller bearings 4 and being in engagement with a gear-wheel 5, said gear-wheel being assembled with an intermediate spur pinion-stem 6, said pinion-stem featuring two journals 7 and being journaled in radial roller bearings 8, said bearings featuring two shoulders in the respective outer races thereof. The roller bearings 8, pictured in FIG. 2, featuring single shoulder for the respective inner races, said inner races being assembled with said journals 7, but the likely solution should be sought in using said roller bearings 8 not provided with said inner races, whereby the respective bearing rollers thereof being revolved immediately around said journals 7 of said shaft 6. The ring of said intermediate pinion-stem 6 being meshed with a spur gear 9, said gear being assembled with an output shaft 10, a ball bearing 3 or said rollers bearing 4 giving support to the neck 11 of said shaft 10, said roller bearing 8 thereof carrying said two shoulders on the outer race thereof and featuring said inner race with said single shoulder, said bearing giving support to said end journal 7 of said shaft 10, whereby the diameter of the bearing housing in said gear 9 being greater than the respective inner race shoulder diameter of said bearing 8, a non-loaded lid 12 being putted down on said non-split case 1 and in the none loaded zones of said bearing houses for suiting said intermediate shaft 6 bearings O/D, in said case 1, radial slots 13 are machined, the width of said slots being no less than said diameter of the inner race shoulder of said roller bearings 8 or of said journals 7 respectively, if said inner race is not provided.

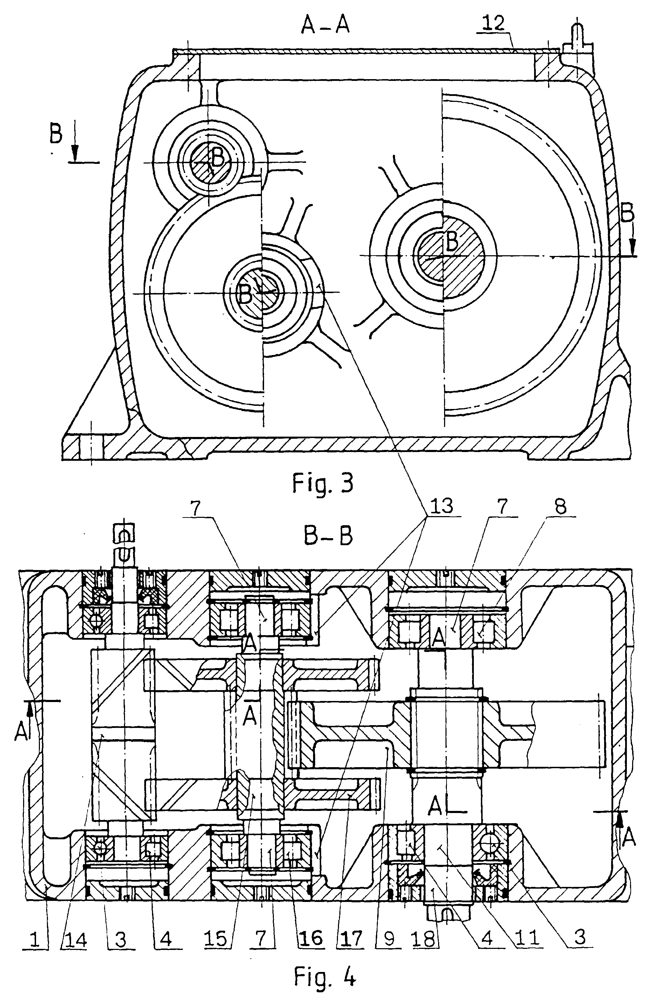

A two-stage spur reduction gearbox meeting the most stringent noise requirements is depicted in FIGS. 3 and 4, said gearbox consisting of an non-split case 1, an input pinion-stem 14, together with two helical tooth rims said rims featuring an opposite direction of hand, an intermediate spur pinion-stem 15 with two end journals 7, said pinion-stem being journaled in radial roller bearings 16 featuring outer races with two shoulders and inner races without said shoulders, whereby on said pinion-stem have been mounted two helical gears 17 with said opposite direction of hand, said helical gears being meshed with the respective tooth rims of said input pinion-stem 14 thereof, and an output shaft 18 with mounted spur gear 9, said spur gear being meshed with the respective rim of said pinion-stem 15 thereof, whereby both said input and output shafts being journaled in a similar manner, as it has been described for the first spur reduction gearbox and depicted in FIGS. 1 and 2 respectively, and in the none loaded zones of the bearing housings for said bearings 16, in said case 1 are machined radial slots 13, the width of said slots being no less than the outside diameter (O/D) of the inner races of said bearings 16 or the diameter of said journals 7, if said roller bearings to by used are of the type without said inner races.

The general design feature of the two disclosed spur reduction gearboxes might be seen on FIGS. 1 and 3 and more particularly, the axes of rotation for said shafts 2, 6, and 10 (in FIG. 1), and 14, 15, and 18 (in FIG. 3), respectively being none coplanar.

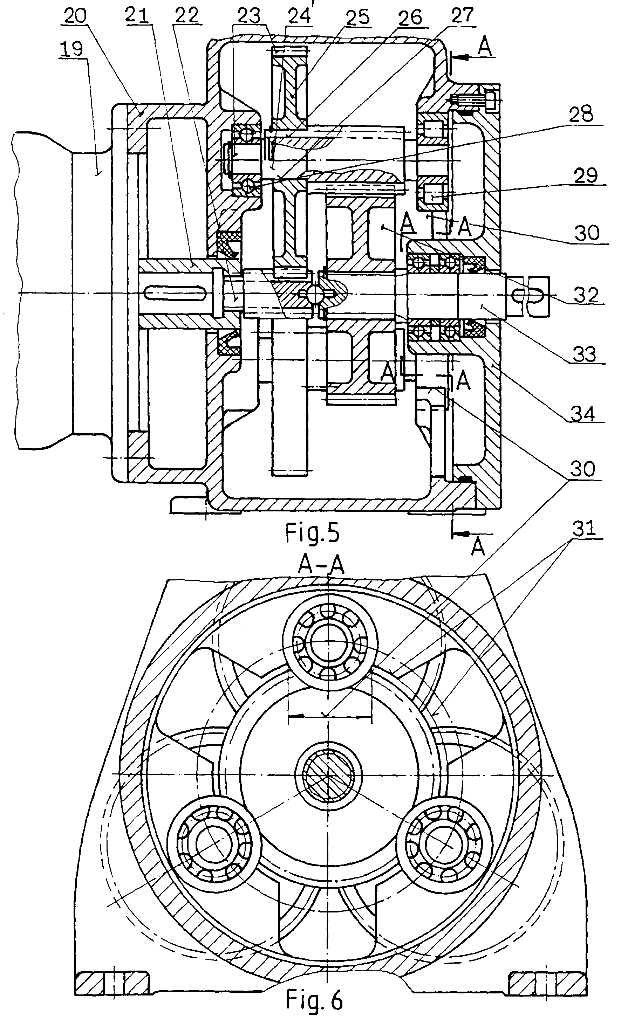

A multipath, two-stage geared motor, illustrated in FIGS. 5 and 6, consisting of an motor 19 flanged to an non-split case 20, whereby on the shaft of said motor being mounted a clutch 21, said clutch being assembled to an input pinion-stem 22 by means of an involute shaft-splined hole, whereby the respective tooth rim of said pinion-stem 22 thereof being meshed with the three cluster gears 23 the axles of said cluster gears being coplanar with a cylindrical surface, said surface being register with said input pinion-stem, whereby each of said cluster gears 23 consisting of an intermediate pinion-stem 24 and a gear reducer 25 said pinion-stem and gear reducer being assembled by means of an involute shaft-splined hole or a press fit 27, whereby said intermediate pinion-stem 24 being journaled in radial bearings 28 and supported by the wall of the box 20, said wall is located in the input side, and said pinion-stem being journaled in radial roller bearings 29 respectively in the output side thereof, whereby said radial roller bearings featuring each two shoulders on outer races, hereinafter, in the none loaded zone of the respective bearing housings for said roller bearings 29, just in the box wall 20 at the output side thereof, radial installation slots 30 have been cut, the width of said slots being no less than the diameter of the addendum circle of the rims of said intermediate pinion-stems 24, said slots being intermittent regions of a cylindrical surface 31, and said surface being register with the centre axle of said gearbox, hereinafter, the diameter of said slots might be no less than the diameters of the addendum circles (i.e. O/D) of said gear reducers 25 and 32, the rims of said intermediate pinion-stem 24 being meshed with a central gear reducer 32, said gear reducer being register with said input pinion-stem 22 and being linked to the output shaft, whereby all rims of the gear-wheels being spur type, and the output shaft 33 being journaled in radial bearings, said bearings being supported in the lid 34.

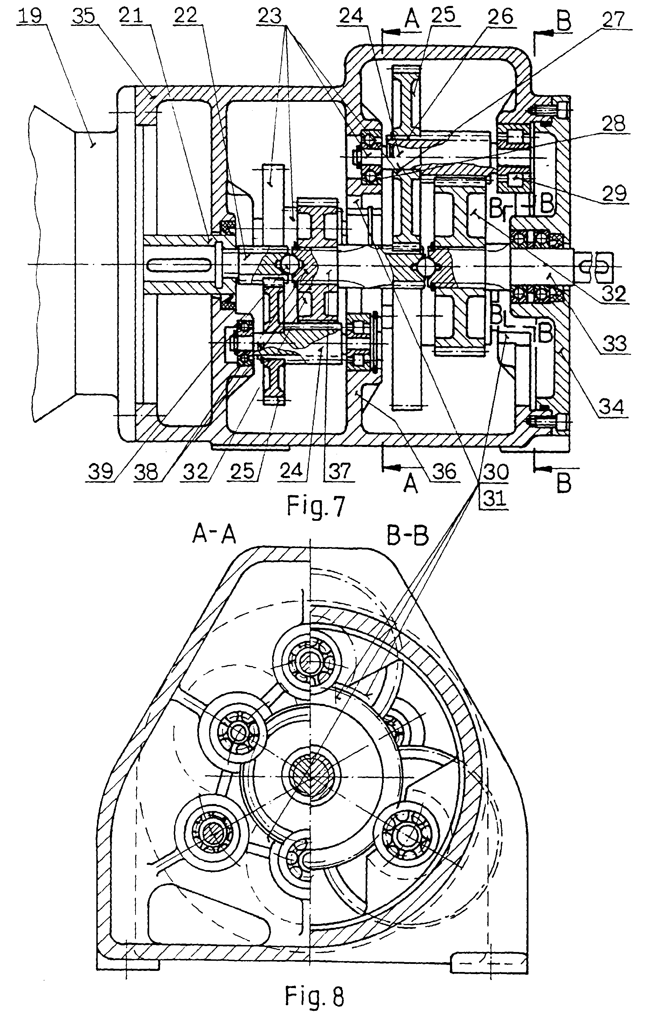

A multipath, four-stage geared motor, illustrated in FIGS. 7 and 8, consisting of two connected in- series two-stage multipath bearings, whereby said bearings being housed in a common non-split case 35, said case 36 and symmetrically arranged bearing housings 29 and 28 comprising an intermediate wall for the first and the second gearing respectively, whereby an intermediate pinion-stems 24 being supported (journaled) in said housings, a central gear reducer 32 from said first gearing being assembled by means of shaft-splined hole to the driver pinion-stem 37 from said second gearing, whereby a cluster gear 38 consisting of a gear-wheel 32 and a pinion-stem 37 and having possibility to float" in radial direction, but being bounded in axial direction by means of two fulcrum balls 39, said balls being placed in the respective centre holes of the shafts thereof.

The assemblage of the reduction gear boxes, depicted in FIGS. 1, 2, 3, and 4, is initiated by a selective assembly of the shafts 2 (14) with the bearings 3/4, the shafts 6 (15) with the gear-wheels 5 (17), and the respective inner races of said roller bearings 8 (16) thereof, said assembly being carried out external to the case (1), hereinafter, said assembled units and said shafts 6 (15) being coupled into said case 1 through the open hole from above, and set up in said case 1 using the mounting (i.e. an easy-to-get-at) slots 13 through which pass also the inner races of said roller bearings 8(16), following which the set proper of the external races of said bearings 8 (16) plus the roller cages is to be performed.

The assemblage of the multipath reduction gearboxes, depicted in FIGS. 5, 6, 7, and 8, is initiated by a selective assembly of the shafts 24 with the gears 25, the bearings 29, the shafts 33 with the gears 32 and the respective radial bearings thereof, and the shaft 37 to the gear 32, in order to make a cluster gear 38, whereby said assembly being carried out external to the cases 20 (35), hereinafter, said assembled units with shafts 24 are coupled in said cases 20 (35) trough the respective holes 31 thereof, which is followed by a radial displacement, in order to permit the suitable passing of the rims of said pinion-stems (pinion-shafts) 24 through the mounting slots 30, followed by an axial moving of said units register with the axis of the respective bearing cases thereof, said cases being executed to suit said bearings 28 and 29, hereinafter, through said holes 31 in said cases 20 (35) said cluster gear 38 and units with shafts 33 are set up, which is followed by respective placement of the outer races of said roller bearings 29 plus the roller cages thereof, and at last, the lid 34 night may be putted thereon.

## Claims

1. A gearbox comprising:
a nonsplit casing (1) having a pair of opposing walls;
an input pinion stem (2, 14) journaled in said casing (1) and capable of being driven;
at least one intermediate pinion stem (6, 15), journaled between said opposing walls;
an output shaft (11) journaled in said casing, said pinion stems each being formed with toothed rims;
gears (5, 17, 9) in said casing meshing with said toothed rims and operatively coupling said input shaft (2, 14) with a said intermediate pinion stem (6, 15) and said output shaft (11) with a said intermediate pinion stem (6, 15) to effect a speed change between said input pinion stem (2, 14) and said output shaft (11);
a pair of inwardly projecting generally cylindrical opposite bearing housings on said walls for each of said intermediate pinion stems (6, 15), said intermediate pinion stems (6, 15) having journals (7) at opposite ends thereof, said bearing housings having radially open slots (13) of a width greater than diameters of said journals (7) to enable lateral insertion of said journals (7) into said housings; and
respective radial roller bearings (8, 16) retaining each of said journals (7) in a respective one of said housings, each of said radial roller bearings (8, 16) including an outer bearing race having a pair of inwardly projecting shoulders (8a, 8b) flanking an array of rollers thereof.

2. The gearbox defined in claim 1 wherein said radial roller bearings (8, 16) include respective inner races mounted on said journals (7), said slots (13) being of a width at least equal to outer diameters of said inner races.

3. The gearbox defined in claim 1 wherein said gears include at least one pair of gears (17) on a respective intermediate pinion stem (15) having helical gearing of opposite hand.

4. A gearbox comprising:
a nonsplit casing (20, 35) having a pair of opposite walls spaced apart along an axis of said casing (20, 35), said casing (20, 35) being axially open at one of said walls;
an input pinion stem (22) extending into said casing (20, 35) along said axis through an opening in the other of said walls, formed with a toothed rim thereof and capable of being driven;
a plurality of intermediate pinion stems (24) journaled between said opposing walls, having respective axes lying along a cylindrical surface centered on said axis, and each having respective end journals;
respective cluster gears (23) featuring pinion stems (24) and gears (25) thereof, meshing with said toothed rims of said input pinion stems (22), said intermediate pinion stems (24) having respective toothed spur rims ;
an output shaft (33) extending along said axis into said casing (20, 35) through said one of said walls and having an output spur gear (32) meshing with said toothed rims of said intermediate pinion stems (24);
a pair of generally cylindrical opposite bearing housings on said walls for each of said intermediate pinion stems (24), said bearing housings on said one of said walls having radially open slots (30) of a width greater than diameters of said toothed rims of said intermediate pinion stems (24) to enable lateral insertion of said toothed rims of said intermediate pinion stems (24), and after that, by means of lateral displacement said cluster gears (23) being set-up in the bearings housings of the bearings (28, 29), said slots (30) being formed as openings in a cylindrical surface (31) of a diameter greater than addendum circles of said gears (25, 32) in order to pass through said cylindrical surface (31);
respective radial roller bearings (29) retaining each of said journals in a respective one of said housings, each of said radial roller bearings (29) including an outer bearing race having a pair of inwardly projecting shoulders flanking an array of rollers thereof; and
a detachable cover (34) closing said casing (20, 35) at said one wall.

5. The gearbox defined in claim 4 wherein said input shaft (38) is an output shaft for a first gearing stage in said casing.

## Patentansprüche

1. Getriebe mit
einem nicht-geteilten Gehäuse (1) mit einem Paar gegenüberliegender Wände;
einer Antriebsritzelwelle (2, 14), die in dem Gehäuse (1) gelagert ist und angetrieben werden kann;
mindestens einer Zwischenritzelwelle (6, 15), die zwischen den gegenüberliegenden Wänden gelagert ist;
einer Abtriebswelle (11), die in dem Gehäuse gelagert ist, wobei die Ritzelwellen jeweils mit gezahnten Außenflächen ausgebildet sind;
Zahnrädern (5, 17, 9) in dem Gehäuse, die mit den gezahnten Außenflächen kämmen und die Antriebswelle (2, 14) mit einer der Zwischenritzelwellen (6, 15) und die Abtriebwelle (11) mit einer der Zwischenritzelwellen (6, 15) wirkkoppeln, um eine Drehzahlwandlung zwischen der Antriebsritzelwelle (2, 14) und der Abtriebswelle (11) zu bewirken;
einem Paar nach innen vorstehender, im Allgemeinen zylindrischer, gegenüberliegender Lagergehäuse an den Wänden für jede der Zwischenritzelwellen (6, 15), wobei die Zwischenritzelwellen (6, 15) Achszapfen (7) an ihren entgegengesetzten Enden aufweisen, die Lagergehäuse radial offene Schlitze (13) aufweisen, deren Breite größer als die Durchmesser der Achszapfen (7) ist, um ein seitliches Einfügen der Achszapfen (7) in die Lagergehäuse zu ermöglichen; und
entsprechenden Radialrollenlagern (8, 16), die jeden der Achszapfen (7) in einem entsprechenden der Lagergehäuse halten, wobei jedes der Radialrollenlager (8, 16) eine äußere Lagerschale mit einem Paar nach innen vorstehender Randanschläge (8a, 8b) aufweist, die ihre Rollenanordnung begrenzen.

2. Getriebe nach Patentanspruch 1, wobei die Radialrollenlager (8, 16) entsprechende innere Lagerschalen aufweisen, die auf die Achszapfen (7) montiert sind, und die Breite der Schlitze (13) mindestens gleich den Außendurchmessern der inneren Lagerschalen ist.

3. Getriebe nach Patentanspruch 1, wobei die Zahnräder mindestens ein Paar von Schrägverzahnung entgegengesetzter Richtung aufweisenden Zahnrädern (17) auf einer entsprechenden Zwischenritzelwelle (15) aufweisen.

4. Getriebe mit
einem nicht-geteilten Gehäuse (20, 35) mit einem Paar gegenüberliegender Wände, die entlang einer Achse des Gehäuses (20, 35) voneinander beabständet sind, wobei das Gehäuse (20, 35) auf einer der Wände axial offen ist;
einer sich entlang der Achse durch eine Öffnung in der anderen der Wände in das Gehäuse (20, 35) erstreckender Antriebsritzelwelle (22), die mit einer gezahnten Außenfläche darauf ausgebildet ist und angetrieben werden kann;
einer Mehrzahl von zwischen den gegenüberliegenden Wänden gelagerten Zwischenritzelwellen (24), deren jeweilige Achsen entlang einer auf der Achse zentrierten zylindrischen Fläche liegen, und die jeweils entsprechende Achsendenzapfen aufweisen;
Ritzelwellen (24) und ihre Zahnräder (25) aufweisende entsprechende Stufenzahnräder (23), die mit den gezahnten Außenflächen der Antriebsritzelwelle (22) kämmen, wobei die Zwischenritzelwellen (24) entsprechende gezahnte Stirnradaußenflächen aufweisen;
einer Abtriebswelle (33), die sich entlang der Achse durch die eine der Wände in das Gehäuse (20, 35) erstreckt und ein mit den gezahnten Außenflächen der Zwischenritzelwellen (24) kämmendes Abtriebsstirnrad (32) aufweist;
einem Paar im Allgemeinen zylindrischer gegenüberliegender Lagergehäuse an den Wänden für jede der Zwischenritzelwellen (24), wobei die Lagergehäuse auf der einen der Wände radial offene Schlitze (30) aufweisen, deren Breite größer als die Durchmesser der gezahnten Außenflächen der Zwischenritzelwellen (24) ist, um ein seitliches Einfügen der gezahnten Außenflächen der Zwischenritzelwellen (24) zu ermöglichen, und danach Einsetzen der Stufenzahnräder (23) mittels seitlichem Versetzen in die Lagergehäuse der Lager (28, 29), wobei die Schlitze (30) als Öffnungen in einer zylindrischen Fläche (31) ausgebildet sind, deren Durchmesser größer als die Kopfkreise der Zahnräder (25, 32) ist, damit diese durch die zylindrische Fläche (31) durchtreten; entsprechenden Radialrollenlagern (29), die jeden der Achszapfen (7) in einem entsprechenden der Lagergehäuse halten, wobei jedes der Radialrollenlager (29) eine äußere Lagerschale mit einem Paar nach innen vorstehender Randanschläge aufweist, die ihre Rollenanordnung begrenzen; und
einer abnehmbaren Abdeckung (34), die das Gehäuse (20, 35) an der einen Wand schließt.

5. Getriebe nach Patentanspruch 4, wobei die Antriebswelle (38) eine Abtriebswelle für eine erste Zahnradübersetzungsstufe in dem Gehäuse ist.

## Revendications

1. Boîte de vitesse, comprenant :
un carter non divisé (1) ayant deux parois opposées,
une tige de pignon d'entrée (2, 14) qui tourillonne dans le carter (1) et peut être entraînée,
au moins une tige de pignon intermédiaire (6, 15) tourillonnant entre les parois opposées,
un arbre de sortie (11) tourillonnant dans le carter, las tiges de pignon étant formées chacune avec des rebords dentés,
des pignons (5, 17, 9) placés dans le carter en prise avec le rebord denté et couplant pendant le fonctionnement l'arbre d'entrée (2, 14) à la tige de pignon intermédiaire (6, 15) et à l'arbre de sortie (11), une tige de pignon intermédiaire (6, 15) étant destinée à assurer un changement de vitesse entre la tige de pignon d'entrée (2, 14) et l'arbre de sortie (11),
une paire de boîtiers opposés de roulements cylindriques de façon générale dépassant vers l'intérieur sur les parois pour chacune des tiges de pignon intermédiaire (6, 15), les tiges de pignon intermédiaire (6, 15) ayant des tourillons (7) à leurs extrémités opposées, les boîtiers de roulement ayant des fentes (13) qui débouchent radialement et dont la largeur est supérieure au diamètre des tourillons (7) afin que les tourillons (7) puissent être insérés latéralement dans les boîtiers, et
des roulements à rouleaux radiaux respectifs (8, 16) retenant chacun des tourillons (7) dans un boîtier respectif, chacun des roulements à rouleaux radiaux (8, 16) comprenant une bague externe de roulement ayant deux épaulements (8a, 8b) qui dépassent vers l'intérieur et entourent un arrangement de rouleaux correspondant.

2. Boîte de vitesse selon la revendication 1, dans laquelle les roulements à rouleaux radiaux (8, 16) comprennent des bagnes internes respectives montées sur les tourillons (7), les fentes (13) ayant une largeur au moins égal aux diamètres externes des bagnes internes.

3. Boîte de vitesse selon la revendication 1, dans laquelle les pignons comportent au moins une première paire de pignons (17) placée sur une tige de pignon intermédiaire respective (15) ayant des engrenages hélicoïdaux de pas opposés.

4. Boîte de vitesse, comprenant :
un carter non divisé (20, 35) ayant deux parois opposées espacées le long d'un axe du carter (20, 35), le carter (20, 35) étant ouvert axialement à l'une des parois,
une tige de pignon d'entrée (22) s'étendant dans le carter (20, 35) le long de l'axe par une ouverture formée dans l'autre des parois, réalisée avec un rebord denté et qui peut être entraînée,
plusieurs tiges de pignon intermédiaire (24) tourillonnant entre les parois opposées, ayant des axes respectifs disposés le long d'une surface cylindrique centrée sur ledit axe, et ayant chacune des tourillons respectifs d'extrémité,
les pignons regroupés respectifs (23) constituant les tiges de pignon (24) et les pignons associés (25), en prise avec les rebords dentés des tiges de pignon d'entrée (22), les tiges de pignon intermédiaire (24) ayant des rebords à denture droite respectifs,
un arbre de sortie (33) qui s'étend le long dudit axe dans le carter (20, 35) à travers l'une des parois et ayant un pignon droit de sortie (32) en prise avec les rebords dentés des tiges de pignon intermédiaire (24),
une paire de boîtiers de roulements opposés de forme générale cylindrique placée sur les parois pour chacune des tiges de pignon intermédiaire (24), les boîtiers de roulement de la première des parois ayant des fentes (30) qui débouchent radialement et ont une largeur supérieure au diamètre des rebords dentée des tiges de pignon intermédiaire (24) afin que l'insertion latérale des rebords dentés des tiges de pignon intermédiaire (24), puis le déplacement latéral des pignons regroupés (23) montés dans les boîtiers de roulement (28, 29) soient possibles, les fentes (30) étant formées par des ouvertures d'une surface cylindrique (31) ayant un diamètre supérieur au cercle de couronne des pignons (25, 32) afin que ceux-ci passent à travers la surface cylindrique (31),
des roulements à rouleaux radiaux respectifs (29) retenant chacun des tourillons dans un boîtier respectif, chacun des roulements à rouleaux radiaux (29) comprenant une bague de roulement externe ayant deux épaulements dépassant vers l'intérieur et entourant un ensemble de rouleaux correspondant, et
un couvercle amovible (34) qui ferme le carter (20, 35) au niveau de la première paroi.

5. Boîte de vitesse selon la revendication 4, dans laquelle l'arbre d'entrée (38) est un arbre de sortie d'un premier étage d'engrenages placé dans le carter.
